# EUROPEAN PATENT APPLICATION

(11) **EP 4 717 520 A1**
(43) Date of publication of application: **01.04.2026**
(21) Application number: 25204399.7
(22) Date of filing: 24.09.2025
(51) Int. Cl.: B60P 1/60, B60P 3/22, F04D 25/02, B60K 25/06

(54) **DISCHARGE SYSTEM FOR DRY BULK TRAILERS**

(30) Priority: 27.09.2024 US 202463700006 P; 12.09.2025 US 202519327544
(71) Applicant: Air Power Systems Co., LLC, Tulsa Oklahoma 74145 (US)
(72) Inventor: Tietz, Ryan, Tulsa, OK 74145 (US)
(74) Representative: Murgitroyd & Company

(57) **Abstract**

A pneumatic discharge system (100) is provided, the system configured to be coupled to a power take-off (PTO, 52) of a transmission of a vehicle (50) operable to transport a dry bulk trailer (122) for unloading dry bulk material from the dry bulk trailer. The system comprises a centrifugal compressor (110) operable to furnish compressed air to pressurize the pneumatic discharge system (100) for causing the dry bulk material to be conveyed from the dry bulk trailer (122), the compressed air creating an air flow stream configured to convey the dry bulk material to a storage tank. A speed increaser (108) is configured to engage with the PTO (52) and furnish rotational motion to drive the centrifugal compressor (110) about a rotational axis. The speed increaser (108) includes a gearbox (107) configured to engage the PTO (52) and to increase the speed of the rotational motion furnished by the PTO, and a traction drive (109) coupled to the gearbox and configured to increase the speed of the rotational motion furnished by the gearbox to drive the centrifugal compressor (110). A compressor assembly operable to unload dry bulk material from a dry bulk trailer configured to be pulled by a vehicle is also provided, as is a truck configured to pull a dry bulk trailer.

## Description

### BACKGROUND

Bulk trucking is a method of transporting unpackaged liquid or dry bulk products in liquid tankers or dry bulk tank trailers. Bulk trucking is a key component in the supply chain of a myriad of industries. Dry bulk tank trailers, or pneumatic trailers, are a specialized tanker trailer designed to transport dry, non-liquid, granular or powdered materials like cement, flour, plastic pellets, or sand, using a pneumatic system for loading and unloading. Dry bulk tank trailers comprise a tank that may include one single compartment, or may be divided into multiple compartments, or hoppers. Dry bulk materials are loaded into the trailer tank through a manhole at the top and exit through the bottom via a pneumatic system that uses air pressure to "fluidize" the material and pneumatically convey the material out of the trailer through hoses to a receiving location.

### SUMMARY

According to a first aspect of the present invention there is provided a pneumatic discharge system configured to be coupled to a power take-off (PTO) of a transmission of a vehicle operable to transport a dry bulk trailer for unloading dry bulk material from the dry bulk trailer, the pneumatic discharge system comprising:
a centrifugal compressor operable to furnish compressed air to pressurize the pneumatic discharge system for causing the dry bulk material to be conveyed from the dry bulk trailer, the compressed air creating an air flow stream configured to convey the dry bulk material to a storage tank;
a speed increaser configured to engage with the PTO and furnish rotational motion to drive the centrifugal compressor about a rotational axis, the speed increaser including:
   a gearbox configured to engage the PTO and to increase the speed of the rotational motion furnished by the PTO; and
   a traction drive coupled to the gearbox and configured to increase the speed of the rotational motion furnished by the gearbox to drive the centrifugal compressor.

Preferably, the speed increaser includes an input shaft coaxial with the rotational axis, the input shaft configured to be received by the PTO.

Preferably, the input shaft includes splines configured to engage with internal splines of the PTO.

Preferably, the speed increaser includes an output shaft configured to drive the centrifugal compressor, where the input shaft and the output shaft are coaxial.

The pneumatic discharge system may further comprise a cooling system configured to remove heat from the speed increaser.

The pneumatic discharge system may further comprise a control system for controlling operation of the pneumatic discharge system, wherein the control system includes a sensor assembly configured to sense an operating condition of the pneumatic discharge system, and a controller configured to receive the operating condition of the pneumatic discharge system sensed via the sensor assembly, the controller configured to change an operation of the centrifugal compressor if the operating condition of the pneumatic discharge system is outside of a predetermined operating condition range.

Preferably, the sensor assembly includes a mass flow sensor and the operating condition of the pneumatic discharge system is a mass flow rate of air delivered by the centrifugal compressor.

According to a second aspect of the present invention there is provided a compressor assembly operable to unload dry bulk material from a dry bulk trailer configured to be pulled by a vehicle, the compressor assembly comprising:
a centrifugal compressor operable to furnish compressed air to pressurize a pneumatic discharge system for causing the dry bulk material to be forced from the dry bulk trailer during unloading;
a motor for furnishing rotational motion to drive the centrifugal compressor; and
a speed increaser disposed between the motor and the centrifugal compressor, the speed increaser configured to increase the speed of the rotational motion furnished by the motor to the centrifugal compressor.

Preferably, the motor comprises an electric motor for furnishing rotation motion to drive the centrifugal compressor.

Preferably, the speed increaser includes:
a housing including a first chamber and a second chamber;
a gearbox disposed within the first chamber of the speed increaser, the gearbox directly coupled to the motor and configured to increase the speed of the rotational motion furnished by the motor; and
a traction drive disposed within the second chamber of the speed increaser, the traction drive coupled to the gearbox and configured to increase the speed of the rotational motion furnished by the gearbox to drive the centrifugal compressor.

Preferably, the speed increaser includes an input shaft coaxial with a rotational axis of the centrifugal compressor, the input shaft configured to be received by motor; and/or the centrifugal compressor is installed on the vehicle.

The compressor assembly may further comprise a control system for controlling operation of the centrifugal compressor, wherein the control system includes a sensor assembly configured to sense an operating condition of the pneumatic discharge system, and a controller configured to receive the operating condition of the pneumatic discharge system sensed via the sensor assembly.

Preferably, the controller is configured to change an operation of the centrifugal compressor if the operating condition of the pneumatic discharge system is outside of a predetermined operating condition range.

Preferably, the sensor assembly includes a mass flow sensor and the operating condition of the pneumatic discharge system is a mass flow rate of air delivered by the centrifugal compressor.

According to a third aspect of the present invention there is provided a truck configured to pull a dry bulk trailer, the truck comprising:
a power take-off (PTO); and
a pneumatic discharge system according to the first aspect.

### DRAWINGS

The Detailed Description is described with reference to the accompanying figures. The use of the same reference numbers in different instances in the description and the figures may indicate similar or identical items.
FIG. 1 is a schematic view of a discharge system for dry and liquid bulk trailers in accordance with example embodiments of the present disclosure.
FIG. 2 is a block diagram illustrating a control system of the discharge system shown in FIG. 1 in accordance with example embodiments of the present disclosure.
FIG. 3 is a perspective view of the discharge system shown in FIG. 1 including a speed increaser and a centrifugal compressor coupled in line with a power take-off (PTO), in accordance with embodiments of the present disclosure.
FIG. 4 is a partially exploded perspective view of the discharge system shown in FIG. 3, in accordance with embodiments of the present disclosure.
FIG. 5 is a cross-sectional side view of the discharge system shown in FIG. 3 along line 5, in accordance with embodiments of the present disclosure.
FIG. 6 is a side view of a dry bulk product trailer and a dry product storage tank to be respectively discharged and loaded by a discharge system, such as the discharge system shown in FIG. 3, in accordance with example embodiments of the present disclosure.

### DETAILED DESCRIPTION

For the purpose of promoting an understanding of the principles of the subject matter, reference will now be made to the embodiments illustrated in the drawings and specific language will be used to describe the same. It will nevertheless be understood that no limitation of the scope of the subject matter is therefore intended. Any alterations and further modifications in the described embodiments, and any further applications of the principles of the subject matter as described herein are contemplated as would normally occur to one skilled in the art to which the subject matter relates.

### Overview

Dry bulk carrier vehicles typically comprise a vehicle such as a tractor or truck pulling a dry bulk tank trailer to transport dry bulk materials (e.g., powder and granule products) location where the dry bulk materials are loaded into the dry bulk tank trailer to a destination where the dry bulk materials are unloaded. Dry bulk carriers often employ a pneumatic discharge system that unloads the dry bulk material from the tank of the dry bulk tank trailer and deposits the material into destination silos for storage. Pneumatic discharge systems use the carrier vehicle's power take-off ("PTO") to transfer power from the vehicle's engine to a rotary lobe blower that creates a high-volume and low-pressure stream of air to pneumatically convey the dry product from the carrier to the storage silos.

There are several disadvantages of using rotary lobe blowers in a dry bulk pneumatic discharge system. The first disadvantage is the weight and size of the blowers, which are considerably large and heavy to transport with the discharge system and may weigh more than three-hundred pounds (300 lbs.), with some "compact" models weighing over seven hundred pounds (700 lbs.). The weight of the blower reduces the payload available for the dry bulk material transported by the carrier vehicle. Another disadvantage is the difficulty in positioning the blowers directly in-line with the PTO via a drive shaft connecting the blower and the PTO. Misalignment between the blowers input shaft and the drive shaft is a common challenge for operators and/or manufacturers to find a place to mount the blower onto the truck frame. Because of this limitation, the rotary lobe blower must be mounted to the chassis of the vehicle. However, given the outdated design of the blowers, it is becoming increasingly difficult to provide blowers to fit current and possibly future vehicle chassis designs, especially in vehicles that include advanced environmental controls that occupy a large portion of the available chassis space of the vehicle. This outdated blower design along with their size and weight requirements makes installing the blower directly in-line with the PTO complicated and limits the vehicles that can be used to only certain models that are compatible with this arrangement.

Additionally, since the rotary lobe blowers used in traditional discharge systems only use the velocity of the air stream to transport the material, the unloading process can take a significant amount of time to complete. The blowers further have a limited range of operating speeds and often do not meet the commercial pressures necessary to reduce unloading times. The limited speed ranges of the blowers also restrict the different types of bulk materials (product) that a given dry bulk tank trailer can accommodate, as different materials may require a higher or lower rated speed to be effectively conveyed by the pneumatic discharge system. Lastly, the blowers typically require lubricating oil for lubrication and cooling of the rotating lobes of the blower, which, when mixed with the delivered air flow, can potentially contaminate the bulk product to be conveyed during its unloading from the trailer.

Accordingly, the present disclosure is directed to a pneumatic discharge system for unloading dry bulk material from mobile bulk tank trailers pulled by a vehicle such as a tractor or truck. The pneumatic discharge system includes a centrifugal compressor operable to supply a compressed air flow to pressurize the discharge system to pneumatically convey the dry bulk material from the mobile bulk tank trailer to a storage facility (e.g., a storage tank, facility, etc.). The centrifugal compressor is driven by the vehicle's PTO to transfer rotational motion to the centrifugal compressor. A speed increaser is disposed between the centrifugal compressor and the PTO to increase the speed of rotational motion furnished from the PTO to the centrifugal compressor.

In embodiments, the discharge system includes a control system configured to control operation of the pneumatic discharge system. The control system may monitor operating conditions of the discharge system and change a mode of operation of the discharge system based on the monitored operating conditions or a user input.

The centrifugal air compressor is configured to provide a pressurized air flow to the discharge system to effectively convey the dry bulk material at higher speeds, in a shorter time frame, and using a smaller footprint than a traditional rotary lobe blower. Additionally, a pneumatic discharge system employing a centrifugal air compressor as described herein may weigh less than one-third (1/3) of the weight of discharge system employing traditional rotary lobe air blowers and may have a footprint (e.g., size and/or volume) that is about one-fourth (1/4) that of systems employing a traditional air blower when installed to the vehicle's chassis. Moreover, the discharge system of the present disclosure has the flexibility to operate over a wider range compressor speeds to accommodate a greater variety of bulk materials.

### Detailed Description of Example Embodiments

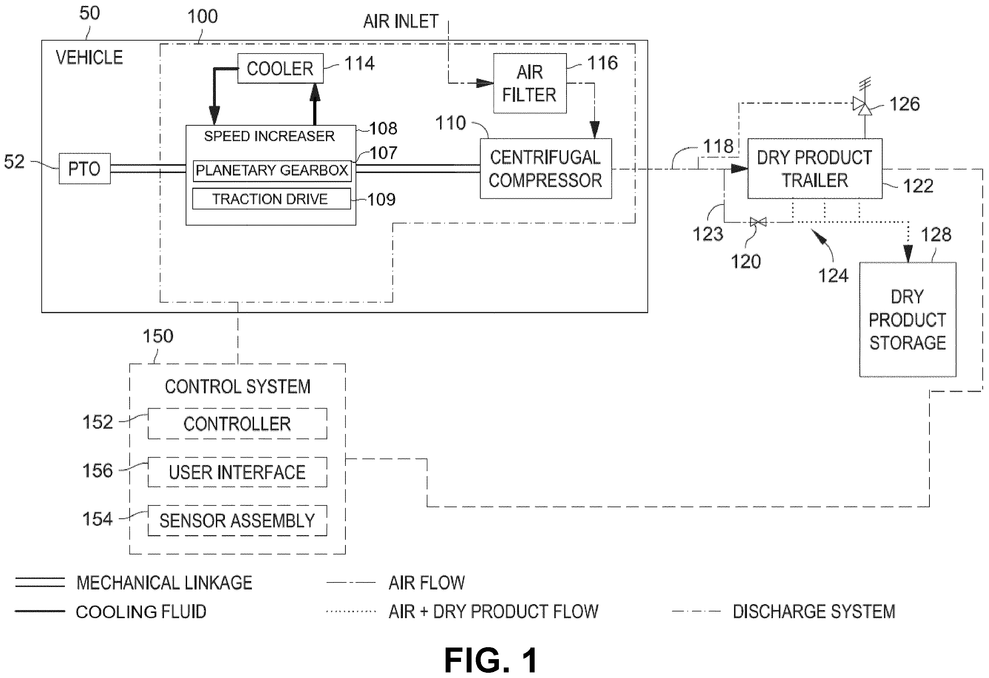

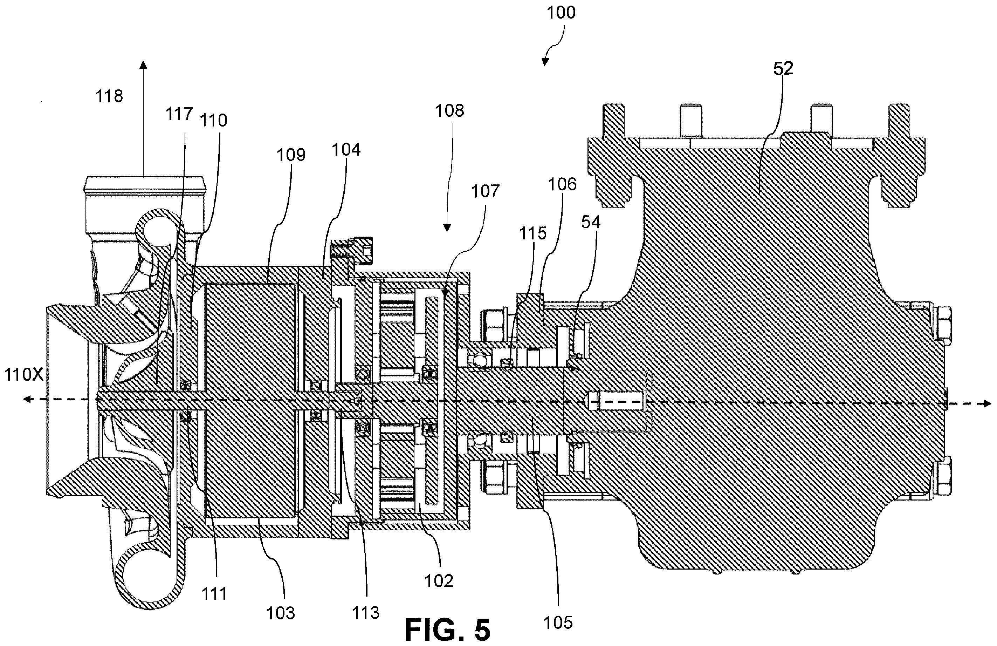

Referring generally to FIGS. 1 through 6, a discharge system 100 for a dry bulk trailer 122, also referred to as a dry product trailer 122, is described. The discharge system 100 may be directly installed on a vehicle 50 such as a truck or tractor. The discharge system 100 is directly coupled to a Power Take-Off ("PTO") 52 of the transmission of the vehicle 50. As shown, the discharge system 100 comprises a pneumatic system that includes a speed increaser 108, and a centrifugal compressor 110. In other embodiments, the discharge system 100 may include an electric motor (not shown) configured to furnish rotational motion to drive the centrifugal compressor 110. The electric motor may be powered using a battery of the vehicle in embodiments where the vehicle 50 is an electric vehicle (EV).

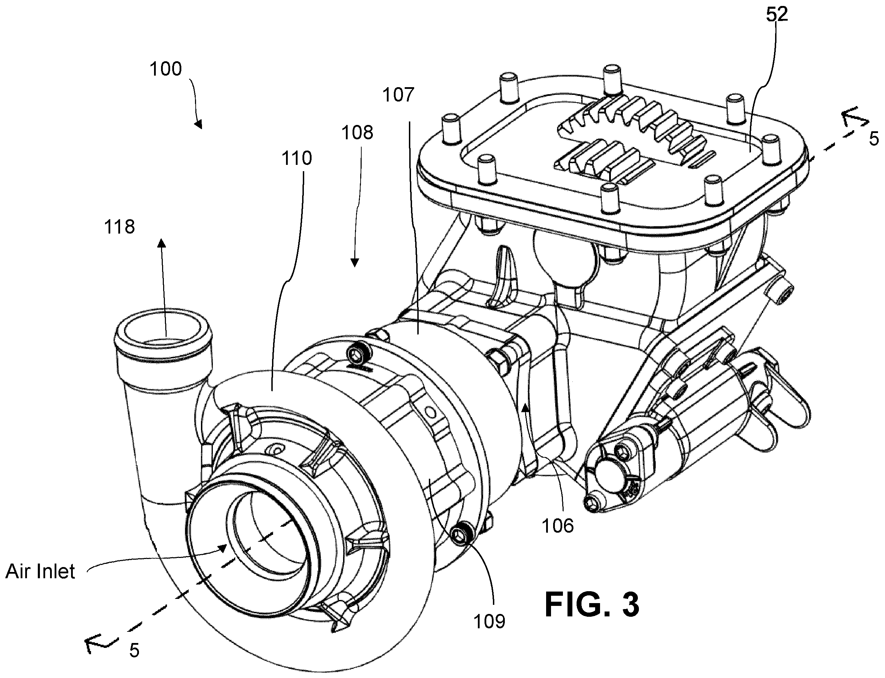

In embodiments, the discharge system 100 is coupled to the power take-off (PTO) 52 of the transmission of the vehicle 50. The PTO 52 may include an oil seal 54 that keeps transmission fluid within the PTO 52 from leaking outside the PTO 52. As shown in FIGS. 3 through 5, the PTO 52 is directly coupled to the speed increaser 108 to drive the centrifugal compressor 110. The centrifugal compressor 110 includes an impeller 117 that rotates around a rotational axis 110X.

The speed increaser 108, also referred to as speed multiplier, is configured to increase the speed of the rotational motion transferred from the PTO 52 to reach the operating speed(s) of the centrifugal compressor 110. In embodiments, the speed increaser 108 is a two-phased speed increaser. In other embodiments, the speed increaser 108 may have one or more phases that cumulatively increase the rotational speed of the PTO 52 transmitted to reach the operational speed needed for the centrifugal compressor 110 to discharge the bulk material of the dry bulk trailer 122. For example, the speed increaser 108 may increase the rotational speed of the PTO, allowing the centrifugal compressor 110 to run between 25 times and 35 times the speed of the PTO. In these embodiments, an overall gear ratio of the speed increaser 18 may be between a 25:1 gear ratio and a 35:1 ratio.

In example embodiments, the speed increaser 108 includes a housing 104 defining a first chamber 102 and a second chamber 103. The first chamber 102 houses a gearbox 107 with an input shaft 105 and an output shaft 113. The second chamber 103 houses a traction drive 109, where the traction drive includes an output shaft 111. The speed increaser 108 includes a coupling portion 106, where the coupling portion 106 engages with the PTO 52 and houses the input shaft 105. The coupling portion 106 may include a seal plate 115 that seals a lubricating fluid of the gearbox portion 107.

In embodiments, the input shaft 105, the gearbox 107 output shaft 113, and the output shaft 111 are coaxial with the rotational axis 110X. In embodiments, the input shaft 105 includes splines 112 disposed on an end of the shaft 105. The splines 112 engage with interior splines disposed on an opening of the PTO 52. In example embodiments, the splines 112 may be an involute spline, a triple square, a stub tooth spline, square teeth, arc teeth, radial slots, tri-lobes, hex indents, keys, keyways, among others.

The input shaft 105 drives the gearbox 107. In the embodiments shown, the gearbox 107 is a planetary gearbox. In other embodiments, the gearbox 107 may be a helical gearbox, a spur gearbox, a hollow shaft gearbox, a right-angle gearbox, or another gear drive arrangement configured to receive rotational motion and high torque from the PTO 52 through the input shaft 105 and increase the rotational speed of the motion. In example embodiments, the gearbox 107 increases the speed of the rotational motion supplied by the PTO 52 in a 4:1 gear ratio, with an output shaft 113 of the gearbox 107 rotating four (4) times for every one (1) rotation of the input shaft 105. In other embodiments, the gear ratio of the gearbox 107 may be lower than or higher than a 4:1 gear ratio. The gear ration of the gearbox 107 is not a limiting component of the disclosure.

The gearbox 107 drives the traction drive 109. In embodiments, the traction drive includes a plurality of friction rollers arranged in a planetary arrangement. The traction drive 109 transmits power through friction forces between the friction rollers and a traction fluid. In embodiments, the traction drive 109 may have a gear ratio of 12:1. In other embodiments, the gear ratio of the traction drive 109 may be lower than or higher than a 12:1 gear ratio. In other embodiments, the traction drive 109 may be a gearbox such as a helical gearbox, a spur gearbox, a hollow shaft gearbox, a right-angle gearbox, a combination thereof, or another gear drive or pulley drive arrangement configured to receive rotational motion from the gearbox 107 output shaft 113 and increase the output speed of the output shaft 111 driving the impeller 117 of the centrifugal compressor 110.

In the embodiment shown, the speed increaser 108 is coupled to a cooling system 114 configured to remove heat from the mechanical components of the gearbox 107 and/or the traction drive 109 through the circulation of a cooling fluid. In embodiments, the cooling fluid may also act as a lubricating fluid. In embodiments, the cooling system 114 may include a pump (e.g., a vane pump), a filter, a cooling fluid reservoir, and a cooler (heat exchanger). In other embodiments, the cooling system 114 may include a pump and a heat exchanger and use the housing 104 of the speed increaser 108 as an integral reservoir for the cooling fluid circulated in the cooling system 114. In embodiments, the cooling system 114 acts independently between the gearbox 107 and the traction drive 109. The cooler may include an air-cooling system, where air, for example moved by an electric fan, passes over fins of the cooler, convecting heat from the metal. In other embodiments, the cooler may be a liquid-cooled cooler, where a cooling fluid (e.g., of the truck 50) comes into contact with the cooling/lubricating fluid of the cooling system 114, carrying the heat away from the cooling system 114.

The speed increaser is configured to operate the centrifugal compressor 110 at a high speed with low friction. For example, the speed increaser 108 may operate the centrifugal compressor 110 at a speed range between eight-thousand revolutions per minute (8,000 RPM) to one-hundred and twenty-thousand revolutions per minute (120,000 RPM). In an example embodiment, the centrifugal compressor 110 may operate in a speed range between sixty-thousand revolutions per minute (60,000 RPM) to seventy-thousand revolutions per minute (70,000 RPM). In another example embodiment, the centrifugal compressor 110 may operate in a speed range between eighty-thousand revolutions per minute (80,000 RPM) to one-hundred and twenty-thousand revolutions per minute (120,000 RPM), and so on. Because the centrifugal compressor 110 can run at higher speeds than traditional air blowers, the unloading time of the tank 121 of the dry bulk trailer 122 is significantly reduced.

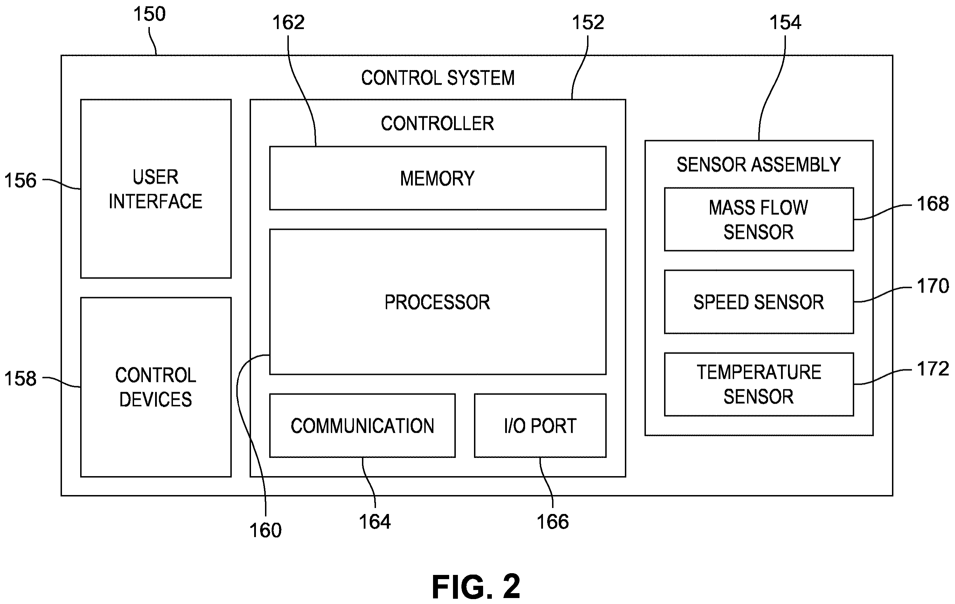

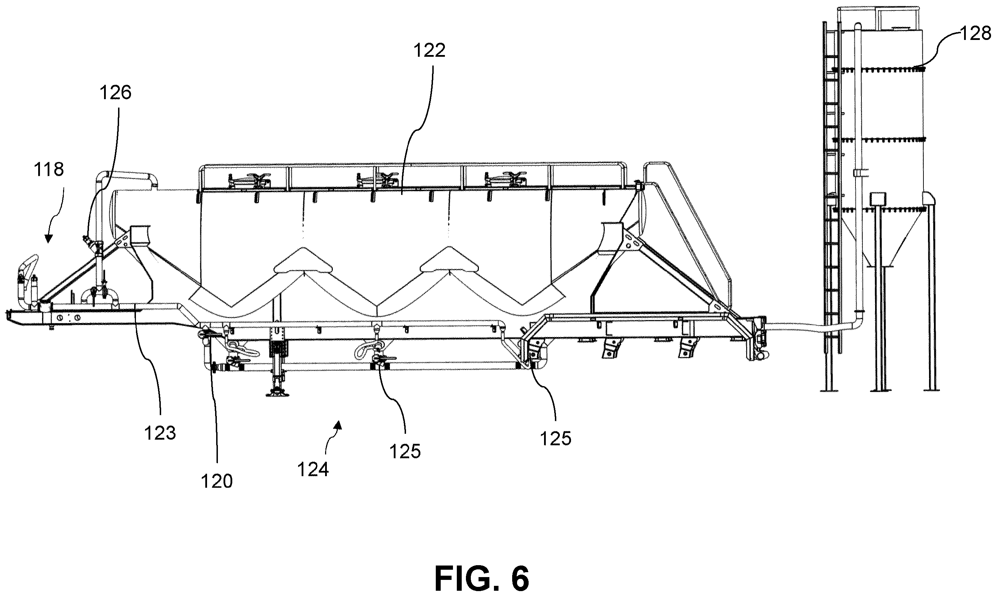

As previously described, the centrifugal compressor 110 is configured to supply a pressurized air flow through a compressor discharge 118 to a piping system 124 of a dry bulk trailer 122 having a discharge pipe 123, as shown in FIG. 6. The centrifugal compressor 110 may include an air filter 116 for filtering the air flow to the centrifugal compressor 110 from the air inlet, as shown in FIGS. 1 and 2. In embodiments, a total weight of the discharge system 110, including the speed increaser 108 and the centrifugal compressor 110 is in a range of seventy-five pounds (75 lbs.) to one-hundred and twenty-five pounds (125 lbs.). The discharge system 110 is lighter than a rotary lobe blower used in traditional discharge systems, allowing an increased payload capacity of the vehicle 50 that can be used to carry more product in the trailer 122.

The piping system 124 may include a plurality of control valves 125 in a valve system that can be opened and closed to regulate the amount of product coming from the dry bulk trailer 122 (e.g., hoppers of the dry bulk trailer 122) and flowing into the discharge pipe 123. In embodiments, the plurality of control valves 125 may be automatically and/or manually actuated independently of each other. For example, a first valve 125 may open a first compartment of the dry bulk trailer 122 and a second valve 125 may open a second compartment of the dry bulk trailer including a different dry bulk product than the first compartment of the dry bulk trailer 122.

The discharge pipe 123 further includes a discharge valve 120 moveable between a normally closed position and an open position. In the normally closed position, the discharge valve 120 prevents the discharge pipe 123 from discharging the dry bulk product from the dry bulk trailer 122 to the dry product storage 128. In the open position, the discharge valve 120 allows the discharge pipe 123 to discharge the dry bulk product from the dry bulk trailer 122 to the dry product storage 128 when the centrifugal compressor 110 furnishes the pressurized air flow to the dry bulk trailer and/or the discharge pipe 123. In example embodiments the mass flow rate of the discharged air and dry product may be in a range between 0.2 kg/s and 0.5 kg/s. In comparison to rotary lobe air blowers, the higher mass flow rate delivered by the discharge system 100 allows the operator to discharge the dry bulk trailer 122 in a shorter amount of time.

In embodiments, the pressurized air is delivered to the dry bulk trailer 122 and, once the dry bulk trailer 122 reaches a predetermined pressure, the discharge valve 120 can be opened to start discharging the material contained in the dry bulk trailer 122 via pneumatic conveyance. The dry product can then move out of the dry bulk trailer and through the discharge pipe 123. The discharge system 100 may further include a relief valve 126 connected to the dry bulk trailer 122, where the relief valve 126 is in a normally closed state.

A method of discharging a bulk product trailer in accordance with the present disclosure reduces discharge time as well as energy consumption during emptying of a dry or wet bulk product trailer. In embodiments, by using a centrifugal compressor, the horsepower required to discharge the dry bulk material is in a range between twenty-five percent (25%) to thirty-five percent (35%) less than traditional discharge systems that employ air blowers. During use, the speed of the centrifugal air compressor 110 can be varied such that the same vehicle 50 can be used to unload different materials. For example, emptying of a first bulk commodity or material can be performed at a first speed and the unloading of a second bulk commodity different than the first bulk commodity can be performed at a second speed different than that of the first speed. The first bulk commodity may be different from the second bulk commodity in at least one material property, including but not limited to the product's density, viscosity, etc. For example, a first bulk commodity might comprise flour and the second bulk commodity might comprise sugar. In another example, the first bulk commodity might comprise cement and the second bulk commodity might comprise ash. In yet another example, a first bulk commodity might comprise plastic pellets having a first size and the second bulk commodity might comprise plastic pellets having a second size different from the first size of the first bulk commodity.

FIG. 2 shows an embodiment of the control system 150 for the discharge system 100 shown in FIGS. 1 and 2. In the embodiment illustrated, the control system 150 is comprised of a controller 152, a sensor assembly 154, a user interface 156, and control devices 158 (e.g., devices that control operation of the compressor 110, the speed increaser 108 valves of the bulk product trailer 120, 126, etc.). However, it should be appreciated that the control system 150 illustrated is an example of one implementation, and that in other implementations, that control system 150 may comprise different configurations and/or equipment without departing from the scope of the present disclosure

As shown in FIG. 2, the controller 152 includes a processor 160, memory 162 (e.g., a non-transitory computer-readable storage medium), a communications interface 164, and one or more input/output (I/O) ports 166. In FIG. 1, the controller 152 is illustrated as a unitary component. However, those of skill in the art will understand that the controller 152 is not necessarily limited to this configuration. For example, in embodiments, the controller 152 may be implemented as a distributed system. In such embodiments, the controller 152 may comprise two or more different control units connected via a network (not shown).

The sensor assembly 154 may include a plurality of sensors including but not limited to one or more mass flow sensors 168, one or more compressor speed sensors 170, one or more cooling fluid temperature sensors 172, among others. The sensor assembly 154 may monitor operating conditions of the centrifugal compressor 110 and the piping systems of the dry bulk trailer 122. In embodiments, the mass flow sensor(s) 168 is arranged to monitor a flow through the discharge pipe 123. The controller 152 may control the position/state of the discharge valve 120 and the pressure relief valve 126 and may control the speed of the centrifugal compressor 110 by monitoring the compressor speed sensor(s) 170. The controller 152 may adjust the speed of the centrifugal compressor 110 to increase the performance of the centrifugal compressor 110 based on the dry bulk product to be discharged from the dry bulk trailer 122 and other operating conditions of the discharge system 100. In embodiments, the speed of the centrifugal compressor 110 may be adjusted by the control system 150 to compensate for different ambient conditions, including but not limited to elevation, air/ambient temperature, etc. that may change the density of the operating air flow. Adjusting the speed of the centrifugal compressor 110 may reduce unload times and/or increase the efficiency of the discharge system 100.

The temperature sensor(s) 172 may detect the temperature of cooling fluid within the cooling system 114. Other temperature sensors 172 may be coupled to other elements of the discharge system 100 including but not limited to the centrifugal compressor 110 or the speed increaser 108. By monitoring the cooling fluid temperature, the control system 150 may circulate the cooling fluid to the heat exchanger or bypass the heat exchanger using a bypass valve (not shown). In embodiments, a temperature sensor 172 may be disposed between the air filter 116 and the centrifugal compressor 110. If the temperature sensor 172 senses a temperature that exceeds a predetermined threshold, the compressed air delivered by the compressor discharge 118 may be vented into the atmosphere.

The control system 150 may detect conditions that could damage the centrifugal compressor 110. For instance, in embodiments, the control system 150 may shut the discharge system 100 down or vent compressed air to the atmosphere to protect the centrifugal compressor 110 from surging, for example, when the discharge valve 120 is open and the centrifugal compressor 110 is operating at a discharge speed and the flow as indicated by the mass flow sensor 168 is below a predetermined threshold, the controller idles the centrifugal compressor 110 to a speed below the minimum discharge speed needed to discharge the dry bulk trailer 122. In another example, when the discharge valve 126 is open and the centrifugal compressor 110 is operating at a discharging speed, and the mass flow rate being discharged through the discharge pipe 123 is below a predetermined threshold, the relief valve 126 may be opened to avoid damaging the discharge system 100 or the dry bulk trailer 122. The control system 150 may also monitor the temperature sensor(s) 172 to prevent overheating of the speed increaser 108 and/or the centrifugal compressor 110, among others.

In embodiments, the speed increaser 108 is also in communication with the controller 152 and switchable between a first mode and a second mode. The discharge system 100 may include at least a first operating mode and a second operating mode. For example, the first operating mode may be configured for emptying a first dry bulk product from the dry bulk trailer 122 using the centrifugal air compressor 110. The second operating mode may be configured for emptying a second bulk material. By way of another example, the first and second operating modes may differ from one another in discharge speeds needed for the centrifugal air compressor 110 to discharge different types of dry bulk products. For example, the first operating mode may be suitable for emptying pellets and the second operating mode may be suitable for emptying powders. It should be understood that the discharge system 100 may include more operating modes than a first and a second operating mode.

The processor 160 can include any number of processors, micro-controllers, or other processing systems, and resident or external memory for storing data and other information accessed or generated by the control system 150.

The memory 162 can store data, such as a program of instructions for operating the control system 150 (including its components), the discharge system 100 (including its components), and so forth. It should be noted that while a single memory 162 is described, a wide variety of types and combinations of memory (e.g., tangible, non-transitory memory) can be employed. The memory 162 can be integral with the processor 160, can include stand-alone memory, or can be a combination of both.

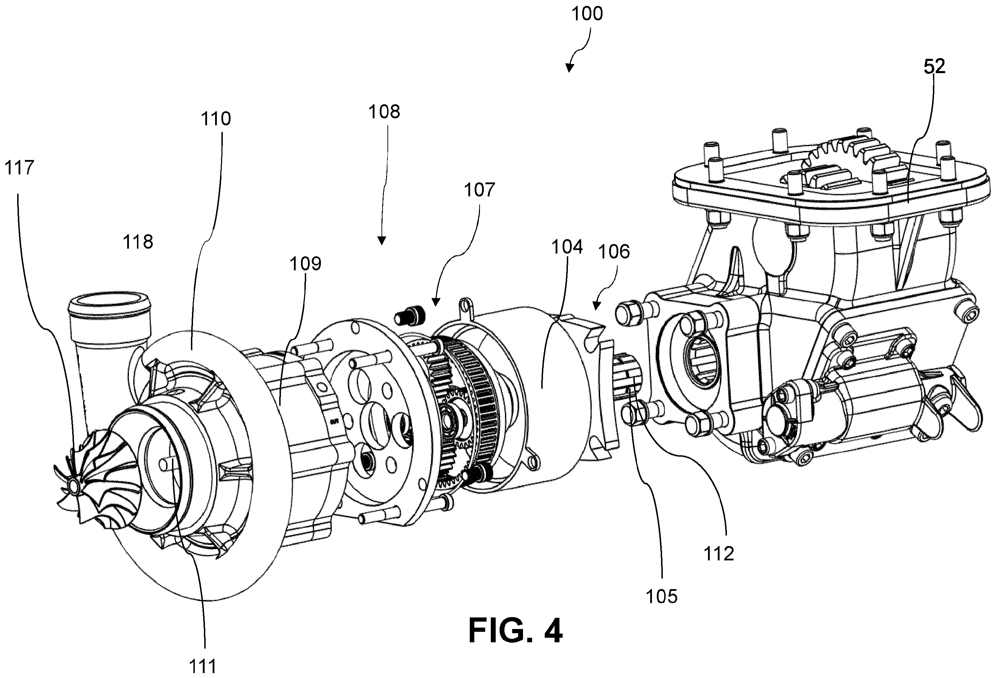

The I/O ports 164 furnish interconnection of the controller 152 with other components of the control system 150 such as the user interface 156, the control devices, and the various sensors of the sensor assembly 154, as shown in FIG. 4, via a wired or wireless network, combinations thereof, and so forth. In this manner, the I/O ports 164 allow the processor 160 to interface with these components to send/receive data and commands/inputs. I/O ports 164 may further include transmitters/receivers or transceivers that furnish communication via a wireless network.

In embodiments, the communication interface 164 permits the control system 150 (e.g., the controller 152) to interface with external systems to send/receive data and commands/inputs. For example, one or more operators may access the control system 150 through the controller 152 from a remote device such as a computer, handheld device (e.g., a tablet, mobile phone, etc.) or the like, via the communication interface 164 to furnish input (commands) to the control system 150 for the compressed air system 100. The operator may further view operational data (e.g., pressures, flow rates, status and/or operational times for equipment (e.g., compressor status and run-time), and so forth.). In embodiments, the communication interface 164 may facilitate secure connection of such remote devices via various data security techniques including, but not limited to, data encryption, system login requirements, biometric security protocols, combinations thereof, and so forth.

The user interface 156 may include one or more displays that display text and/or graphical information on a display screen to an operator of the control system 150. In embodiments, the user interface 156 can include gauges, dials, LCD or LED (light emitting diode) readouts, combinations thereof, and so forth, which may be used for displaying data and status information for the discharge system 100 instead of or in addition to the one or more displays.

The user interface 156 may further include a control interface for input/entry of data and commands. In embodiments, the control interface can include a touch screen interface, buttons, softkeys, keyboards, keypads, knobs, combinations thereof, and so forth, which may be used for entry of data and commands.

The controller 152 provides control to the user interface 156 via the processor 160, the memory 162, I/O ports 166, and/or the communications interface 164. The processor 160 can be operably and/or communicatively coupled with components of the user interface 156. The processor 160 can control the components and functions of the control system 150 and/or the compressed air system 100 described herein using software, firmware, hardware (e.g., fixed logic circuitry), manual processing, or a combination thereof.

While the subject matter has been illustrated and described in detail in the drawings and foregoing description, the same is to be considered as illustrative and not restrictive in character, it being understood that only example embodiments have been shown and described and that all changes and modifications that come within the spirit of the subject matters are desired to be protected. In reading the claims, it is intended that when words such as "a," "an," "at least one," or "one of a plurality of" are used there is no intention to limit the claim to only one item unless specifically stated to the contrary in the claim. Unless specified or limited otherwise, the terms "mounted" and "connected" and variations thereof are used broadly and encompass both direct and indirect mountings, connections, and couplings. Further, "connected" is not restricted to physical or mechanical connections or couplings.

## Claims

1. A pneumatic discharge system configured to be coupled to a power take-off (PTO) of a transmission of a vehicle operable to transport a dry bulk trailer for unloading dry bulk material from the dry bulk trailer, the pneumatic discharge system comprising:
a centrifugal compressor operable to furnish compressed air to pressurize the pneumatic discharge system for causing the dry bulk material to be conveyed from the dry bulk trailer, the compressed air creating an air flow stream configured to convey the dry bulk material to a storage tank;
a speed increaser configured to engage with the PTO and furnish rotational motion to drive the centrifugal compressor about a rotational axis, the speed increaser including:
a gearbox configured to engage the PTO and to increase the speed of the rotational motion furnished by the PTO; and
a traction drive coupled to the gearbox and configured to increase the speed of the rotational motion furnished by the gearbox to drive the centrifugal compressor.

2. The pneumatic discharge system as recited in claim 1, wherein the speed increaser includes an input shaft coaxial with the rotational axis, the input shaft configured to be received by the PTO.

3. The pneumatic discharge system as recited in claim 2, wherein the input shaft includes splines configured to engage with internal splines of the PTO.

4. The pneumatic discharge system as recited in claim 2 or claim 3, wherein the speed increaser includes an output shaft configured to drive the centrifugal compressor, where the input shaft and the output shaft are coaxial.

5. The pneumatic discharge system as recited in any preceding claim, further comprising a cooling system configured to remove heat from the speed increaser.

6. The pneumatic discharge system as recited in any preceding claim, further comprising a control system for controlling operation of the pneumatic discharge system, wherein the control system includes a sensor assembly configured to sense an operating condition of the pneumatic discharge system, and a controller configured to receive the operating condition of the pneumatic discharge system sensed via the sensor assembly, the controller configured to change an operation of the centrifugal compressor if the operating condition of the pneumatic discharge system is outside of a predetermined operating condition range.

7. The pneumatic discharge system as recited in claim 6, wherein the sensor assembly includes a mass flow sensor and the operating condition of the pneumatic discharge system is a mass flow rate of air delivered by the centrifugal compressor.

8. A compressor assembly operable to unload dry bulk material from a dry bulk trailer configured to be pulled by a vehicle, the compressor assembly comprising:
a centrifugal compressor operable to furnish compressed air to pressurize a pneumatic discharge system for causing the dry bulk material to be forced from the dry bulk trailer during unloading;
a motor for furnishing rotational motion to drive the centrifugal compressor; and
a speed increaser disposed between the motor and the centrifugal compressor, the speed increaser configured to increase the speed of the rotational motion furnished by the motor to the centrifugal compressor.

9. The compressor assembly as recited in claim 8, wherein the motor comprises an electric motor for furnishing rotation motion to drive the centrifugal compressor.

10. The compressor assembly as recited in claim 8 or claim 9, wherein the speed increaser includes:
a housing including a first chamber and a second chamber;
a gearbox disposed within the first chamber of the speed increaser, the gearbox directly coupled to the motor and configured to increase the speed of the rotational motion furnished by the motor; and
a traction drive disposed within the second chamber of the speed increaser, the traction drive coupled to the gearbox and configured to increase the speed of the rotational motion furnished by the gearbox to drive the centrifugal compressor.

11. The compressor assembly as recited in any of claims 8 to 10, wherein the speed increaser includes an input shaft coaxial with a rotational axis of the centrifugal compressor, the input shaft configured to be received by motor; and/or
wherein the centrifugal compressor is installed on the vehicle.

12. The compressor assembly as recited in any of claims 8 to 11, further comprising a control system for controlling operation of the centrifugal compressor, wherein the control system includes a sensor assembly configured to sense an operating condition of the pneumatic discharge system, and a controller configured to receive the operating condition of the pneumatic discharge system sensed via the sensor assembly.

13. The compressor assembly as recited in claim 12, wherein the controller is configured to change an operation of the centrifugal compressor if the operating condition of the pneumatic discharge system is outside of a predetermined operating condition range.

14. The compressor assembly as recited in claim 13, wherein the sensor assembly includes a mass flow sensor and the operating condition of the pneumatic discharge system is a mass flow rate of air delivered by the centrifugal compressor.

15. A truck configured to pull a dry bulk trailer, the truck comprising:
a power take-off (PTO); and
a pneumatic discharge system as recited in any of claims 1 to 7.
